(19) Europäisches Patentamt
European Patent Office
Office européen des brevets

(11) **EP 4 312 159 A1**

(12) **EUROPÄISCHE PATENTANMELDUNG**

(43) Veröffentlichungstag:
   **31.01.2024   Patentblatt 2024/05**

(21) Anmeldenummer: **22187291.4**

(22) Anmeldetag: **27.07.2022**

(51) Internationale Patentklassifikation (IPC):
   **G06N 3/082** (2023.01)        **G06N 3/084** (2023.01)
   **G06N 3/092** (2023.01)        **G06N 3/045** (2023.01)

(52) Gemeinsame Patentklassifikation (CPC):
   **G06N 3/082; G06N 3/045; G06N 3/084;
   G06N 3/092**

(84) Benannte Vertragsstaaten:
   **AL AT BE BG CH CY CZ DE DK EE ES FI FR GB
   GR HR HU IE IS IT LI LT LU LV MC MK MT NL NO
   PL PT RO RS SE SI SK SM TR**
   Benannte Erstreckungsstaaten:
   **BA ME**
   Benannte Validierungsstaaten:
   **KH MA MD TN**

(71) Anmelder: **Siemens Aktiengesellschaft
   80333 München (DE)**

(72) Erfinder:
   • **Tokic, Michel
     88069 Tettnang (DE)**
   • **von Beuningen, Anja
     99085 Erfurt (DE)**
   • **Scharinger, Boris
     90762 Fürth (DE)**

(74) Vertreter: **Siemens Patent Attorneys
   Postfach 22 16 34
   80506 München (DE)**

(54) **VERFAHREN UND ANORDNUNG ZUM REDUZIEREN UND ÜBERWACHEN VON KÜNSTLICHEN NEURONALEN NETZEN**

(57)   Zum Reduzieren eines neuronalen Netzes (NN) sind diskrete Reduktionsschritte vorgesehen, durch die jeweils ein Neuron oder eine neuronale Verbindung entfernt wird und/oder eine numerische Auflösung verringert wird. Das trainierte neuronale Netz (NN) wird durch unterschiedliche Test-Reduktionsschritte (TRA, TRB) jeweils zu einem Test-Netz (NNA, NNB) reduziert, und es wird eine Vielzahl von Eingabesignalen (ES) in das trainierte neuronale Netz (NN) sowie in die Test-Netze (NNA, NNB) eingespeist. Weiterhin werden für ein jeweiliges Eingabesignal (ES) zum einen eine Referenzverteilung (VR) von durch das jeweilige Eingabesignal (ES) induzierten, ersten Aktivierungsstärken von Ausgabeneuronen des trainierten neuronalen Netzes (NN) und zum anderen für die Test-Reduktionsschritte (TRA, TRB) jeweils eine Abweichung (DRA, DRB) der Referenzverteilung (VR) von einer entsprechenden Verteilung (VA, VB) von zweiten Aktivierungsstärken von Ausgabeneuronen des betreffenden Test-Netzes (NNA, NNB) ermittelt. Ausgehend davon wird das trainierte neuronale Netz (NN) durch Test-Reduktionsschritte, deren Abweichungen im Mittel geringer sind, als die Abweichungen anderer Test-Reduktionsschritte zu einem reduzierten neuronalen Netz (NNR) reduziert. Das reduzierte neuronale Netz (NNR) wird dann betrieben, wobei im laufenden Betrieb dritte Aktivierungsstärken von Ausgabeneuronen des reduzierten neuronalen Netzes (NNR) erfasst werden. Zum Überwachen des Betriebs wird schließlich abhängig von den dritten Aktivierungsstärken ein Überwachungssignal (MS) ausgegeben.

FIG 3

**Beschreibung**

Komplexe Maschinen, wie z.B. Roboter, Motoren, Fertigungsanlagen, Werkzeugmaschinen, Gasturbinen, Windturbinen, Energieversorgungseinrichtungen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz als Steuermodell darauf trainiert werden, eine Maschine in optimierter Weise zu steuern.

Insofern neuronale Netze zunehmend auch in zeitkritischen Anwendungen oder Echtzeitanwendungen genutzt werden, wird vielfach angestrebt, trainierte neuronale Netze mit möglichst geringem Rechenaufwand zu betreiben. Zur Verringerung des numerischen Aufwands beim Auswerten von trainierten neuronalen Netzen werden diese häufig strukturell reduziert. Dies kann beispielsweise durch Quantisierung oder sogenanntes Pruning erfolgen.

Bei einer Quantisierung kann z.B. ein Datentyp von neuronalen Gewichten reduziert werden, beispielsweise von 64 Bit (double) auf 32 Bit (float) oder sogar auf 8 Bit (int). Auf diese Weise kann eine Rechenkomplexität in der Regel signifikant verringert werden.

Ein Pruning kann sowohl neuronale Gewichte als auch Teile einer Architektur eines trainierten neuronalen Netzes betreffen. So können beispielsweise besonders kleine neuronale Gewichte auf null gesetzt oder bei der Auswertung des neuronalen Netzes vernachlässigt werden. Zusätzlich oder alternativ können Neuronen oder ganze, für den Betrieb weniger relevante Äste des trainierten neuronalen Netzes abgetrennt oder vernachlässigt werden.

Eine derartige Reduktion eines zum Steuern einer Maschine trainierten neuronalen Netzes wird in der Regel so durchgeführt, dass sich die Steuerung der konkreten Maschine nicht signifikant verschlechtert.

In der Praxis erweisen sich solcherart reduzierte neuronale Netze jedoch häufig als weniger robust gegenüber Änderungen von Betriebsbedingungen oder Änderungen an der Maschine als das ursprünglich trainierte neuronale Netz. Derartige, z.B. verschleißbedingte Änderungen von Betriebsbedingungen und/oder der Maschine sind indes Gegenstand vieler Überwachungsmaßnahmen, deren Zuverlässigkeit beim Einsatz von reduzierten neuronalen Netzen in vielen Fällen beeinträchtigt wird.

Es ist Aufgabe der vorliegenden Erfindung, ein Verfahren und eine Anordnung zum Reduzieren und Überwachen eines zum Steuern einer Maschine trainierten neuronalen Netzes anzugeben, die einen robusteren Betrieb und/oder eine zuverlässigere Überwachung der Maschine erlauben.

Gelöst wird diese Aufgabe durch ein Verfahren mit den Merkmalen des Patentanspruchs 1, durch eine Anordnung mit den Merkmalen des Patentanspruchs 7, durch ein Computerprogrammprodukt mit den Merkmalen des Patentanspruchs 8 sowie durch ein computerlesbares Speichermedium mit den Merkmalen des Patentanspruchs 9.

Zum Reduzieren eines zum Steuern einer Maschine trainierten neuronalen Netzes sind diskrete Reduktionsschritte vorgesehen, durch die jeweils mindestens ein Neuron entfernt wird, mindestens eine zwischen Neuronen verlaufende neuronale Verbindung entfernt wird und/oder eine numerische Auflösung verringert wird. Das trainierte neuronale Netz wird durch unterschiedliche Test-Reduktionsschritte jeweils zu einem Test-Netz reduziert, und es wird eine Vielzahl von Eingabesignalen in das trainierte neuronale Netz sowie in die Test-Netze eingespeist. Weiterhin werden für ein jeweiliges Eingabesignal zum einen eine Referenzverteilung von durch das jeweilige Eingabesignal induzierten, ersten Aktivierungsstärken von Ausgabeneuronen des trainierten neuronalen Netzes und zum anderen für die Test-Reduktionsschritte jeweils eine Abweichung der Referenzverteilung von einer entsprechenden Verteilung von zweiten Aktivierungsstärken von Ausgabeneuronen des betreffenden Test-Netzes ermittelt. Unter einer Aktivierungsstärke eines Neurons sei hierbei dem fachsprachlichen Gebrauch folgend, insbesondere ein Ausgabewert oder ein Eingabewert einer Aktivierungsfunktion dieses Neurons verstanden. Unter der Verteilung und speziell unter der Referenzverteilung sei insbesondere eine statistische Verteilung, eine Wahrscheinlichkeitsverteilung oder eine Streuung von Aktivierungsstärken über die Ausgabeneuronen verstanden. Ausgehend davon wird das trainierte neuronale Netz durch Test-Reduktionsschritte, deren Abweichungen im Mittel geringer sind, als die Abweichungen anderer Test-Reduktionsschritte zu einem reduzierten neuronalen Netz reduziert. Das reduzierte neuronale Netz wird dann betrieben, wobei im laufenden Betrieb dritte Aktivierungsstärken von Ausgabeneuronen des reduzierten neuronalen Netzes erfasst werden. Zum Überwachen des Betriebs wird schließlich abhängig von den dritten Aktivierungsstärken ein Überwachungssignal ausgegeben.

Zur Durchführung des erfindungsgemäßen Verfahrens sind eine Anordnung, ein Computerprogrammprodukt sowie ein computerlesbares, vorzugsweise nichtflüchtiges Speichermedium vorgesehen.

Das erfindungsgemäße Verfahren sowie die erfindungsgemäße Anordnung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Das Verfahren basiert unter anderem auf der Beobachtung, dass zur Überwachung eines neuronalen Netzes neben dessen eigentlichem Ausgabesignal vorteilhafterweise auch die relativen Aktivierungsstärken verschiedener Ausgabeneuronen berücksichtigt werden können. So können z.B. bei einem zur Klassifikation eingesetzten neuronalen Netz die Aktivierungsstärken verschiedener, jeweils einer Klasse zugeordneten Ausgabeneuronen verglichen werden, um eine Unsicherheit eines Klassifikationsergebnisses zu bewerten. Wenn neben dem das Klassifikationsergebnis festlegenden Ausgabeneuron mit der höchsten Aktivierungsstärke, ein anderes Ausgabeneuron eine ähnlich hohe Aktivierungsstärke aufweist, kann dies auf eine möglicherweise überwachungsrelevante Unsicherheit des Klassifikationsergebnisses hindeuten. In analoger Weise können bei einem neuronalen Netz, das im Rahmen eines Verfahrens des bestärkenden Lernens zur Prädiktion von sogenannten Q-Werten für verschiedene an einer Maschine vornehmbare Steueraktionen verwendet wird, die relativen Aktivierungsstärken von verschiedenen, jeweils einer Steueraktion zugeordneten Ausgabeneuronen berücksichtigt werden. Falls mehrere Ausgabeneuronen eine vergleichbar hohe Aktivierungsstärke aufweisen, kann dies auf eine möglicherweise überwachungsrelevante Unsicherheit hinsichtlich der vorzunehmenden Steueraktion hindeuten.

Wie oben schon angedeutet, wird die Reduktion von trainierten neuronalen Netzen bei bekannten Reduktionsverfahren derart vorgenommen, dass sich deren Klassifikationen oder Prädiktionen nicht signifikant verschlechtern. Dies wird üblicherweise dadurch erreicht, dass bei bekannten Reduktionsverfahren eine auch für das Training des neuronalen Netzes verwendete Kostenfunktion zur Kontrolle des Reduktionsprozesses genutzt wird. Es ist jedoch in vielen Fällen zu beobachten, dass die Aktivierungsstärken und insbesondere deren Verteilung bei bekannten Reduktionsverfahren wesentlich verändert werden. Dies kann dazu führen, dass eine Zuverlässigkeit von Überwachungsmaßnahmen bei Verwendung reduzierter neuronaler Netze signifikant beeinträchtigt wird.

In Unterschied dazu werden bei einem erfindungsgemäßen Reduktionsprozess auch Verteilungen von Aktivierungsstärken der Ausgabeneuronen berücksichtigt. Ein auf diese Weise reduziertes neuronales Netz liefert in vielen Fällen Verteilungen von Aktivierungsstärken, die nur wenig von entsprechenden Verteilungen des ursprünglichen trainierten neuronalen Netzes abweichen. Dementsprechend kann in vielen Fällen eine reduktionsbedingte Beeinträchtigung von Überwachungsmaßnahmen vermieden oder zumindest verringert werden. Darüber hinaus kann durch die erfindungsgemäße Reduktion ein Rechenaufwand zum Betreiben oder Auswerten des neuronalen Netzes oft wesentlich gesenkt werden.

Vorteilhafte Ausführungsformen und Weiterbildungen der Erfindung sind in den abhängigen Ansprüchen angegeben.

Insbesondere kann eine Streubreite, z.B. eine statistische Streuung, Standardabweichung oder Varianz der dritten Aktivierungsstärken ermittelt werden. Abhängig von der ermittelten Streubreite kann dann ein eine Unsicherheit eines Ausgabesignals des reduzierten neuronalen Netzes quantifizierendes Unsicherheitssignal, ein Warnsignal oder Alarmsignal zur Warnung vor einer möglichen Fehlfunktion der Maschine, ein Steuersignal zum Steuern der Maschine in einen Sicherheits- oder Ruhemodus, ein Anforderungssignal zum Anfordern eines Nachtrainings oder Neutrainings des reduzierten neuronalen Netzes, ein Wartungssignal zur Anzeige einer Degradation der Maschine und/oder ein alternatives Steuersignal oder Klassifikationssignal als Überwachungssignal ausgegeben werden. Als alternatives Steuersignal oder Klassifikationssignal kann beispielsweise ein Ausgabesignal desjenigen Ausgabeneurons ausgegeben werden, das eine zweithöchste Aktivierungsstärke aufweist. Die ermittelte Streubreite kann insbesondere mit einem vorgegebenen Schwellwert verglichen werden. Die Ausgabe des Überwachungssignals kann dann durch ein Überschreiten des Schwellwerts ausgelöst werden.

Nach einer vorteilhaften Weiterbildung der Erfindung kann Ausgabesignalen des trainierten neuronalen Netzes ein digitales Wasserzeichen aufgeprägt sein. Entsprechend kann geprüft werden, ob Ausgabesignale des reduzierten neuronalen Netzes das digitale Wasserzeichen enthalten, und abhängig davon kann ein Benutzungssignal als Überwachungssignal ausgegeben werden. Anhand von aufgeprägten digitalen Wasserzeichen können vorliegende neuronale Netze daraufhin geprüft werden, ob sie vom Verwender des Wasserzeichens stammen. Auf diese Weise können neuronale Netze effektiv gegen unkontrollierte oder unberechtigte Verbreitung oder Verwendung geschützt werden. Bei manchen bekannten Verfahren zur Reduktion von neuronalen Netzen ist indes zu beobachten, dass digitale Wasserzeichen durch die Reduktion unkenntlich oder zumindest nicht mehr sicher nachweisbar werden. Demgegenüber bleiben beim erfindungsgemäßen Reduktionsprozess viele Arten von digitalen Wasserzeichen erhalten oder bleiben zumindest nachweisbar, da die Verteilungen von Aktivierungsstärken der Ausgabeneuronen in der Regel weniger verändert werden als bei bekannten Reduktionsverfahren.

Nach einer vorteilhaften Ausführungsform der Erfindung kann als Abweichung zwischen der Referenzverteilung und der jeweiligen Verteilung von zweiten Aktivierungsstärken eine Kullback-Leibler-Divergenz dieser Verteilungen ermittelt werden. Eine Kullback-Leibler-Divergenz $D_{KL}$ zwischen der Referenzverteilung Q(x) und einer jeweiligen Verteilung P(x) von zweiten Aktivierungsstärken kann insbesondere ermittelt werden gemäß

$$D_{KL}(P \,||\, Q) = \sum_{x \in X}^{N} P(x) \log\left(\frac{P(x)}{Q(x)}\right)$$

, wobei X eine Menge aller Ausgabe-neuronen, N eine Anzahl der Ausgabeneuronen und x ein jeweiliges Ausgabeneuron darstellen. Mittels einer Kullback-Leibler-Divergenz können strukturelle Abweichungen zwischen Wahrscheinlichkeitsverteilungen in der Regel differenzierter abgebildet werden als beispielsweise mittels einer ggf. durch w(x) gewichteten Summe $\sum_{x \in X}^{N} w(x) * \left(P(x) - Q(x)\right)^2$ über quadrierte Differenzen der Verteilungen P und Q.

Nach einer weiteren vorteilhaften Weiterbildung der Erfindung kann das trainierte neuronale Netz um mindestens eine nachgeschaltete Ausgabeschicht erweitert werden. Die mindestens eine Ausgabeschicht kann darauf trainiert werden, für ein jeweiliges Ausgabeneuron des trainierten neuronalen Netzes eine jeweilige Einzel-Streubreite von dessen jeweiliger erster Aktivierungsstärke durch ein dem jeweiligen Ausgabeneuron zugeordnetes, weiteres Ausgabesignal zu reproduzieren. Die Reduktion kann dann an dem durch die trainierte mindestens eine Ausgabeschicht erweiterten trainierten neuronalen Netz ausgeführt werden. Dabei kann eine weitere Abweichung zwischen einer Verteilung der weiteren Ausgabesignale des erweiterten trainierten neuronalen Netzes und einer entsprechenden Verteilung der weiteren Ausgabesignale des betreffenden Test-Netzes ermittelt werden. Das erweiterte trainierte neuronale Netz kann dann durch Test-Reduktionsschritte, deren weitere Abweichungen im Mittel geringer sind, als die weiteren Abweichungen anderer Test-Reduktionsschritte zum reduzierten neuronalen Netz reduziert werden. Hierbei kann als weitere Abweichung vorzugsweise eine Kullback-Leibler-Divergenz zwischen der Verteilung der weiteren Ausgabesignale des erweiterten trainierten neuronalen Netzes und einer entsprechenden Verteilung der weiteren Ausgabesignale des betreffenden Test-Netzes ermittelt werden. Insbesondere kann jeweils eine gewichtete Summe der Abweichung von der Referenzverteilung und der weiteren Abweichung gebildet werden. Entsprechend kann das erweiterte trainierte neuronale Netz durch Test-Reduktionsschritte, deren gewichtete Summen im Mittel geringer sind, als die gewichteten Summen anderer Test-Reduktionsschritte zum reduzierten neuronalen Netz reduziert werden.

Durch die zusätzliche Berücksichtigung von Einzel-Streubreiten der einzelnen Ausgabeneuronen kann der Reduktionsprozess so gesteuert werden, dass auch Unsicherheiten in den jeweiligen einzelnen Aktivierungsstärken im reduzierten neuronalen Netz nur wenig von den entsprechenden Unsicherheiten des trainierten neuronalen Netzes abweichen. Insofern derartige Unsicherheiten häufig überwachungsrelevant sind, erweist sich eine weitgehende Erhaltung dieser Unsicherheiten im reduzierten neuronalen Netz in vielen Fällen als vorteilhaft und erlaubt eine robustere und/oder zuverlässigere Überwachung des Maschinenbetriebs.

Weiterhin kann zum Training der mindestens einen Ausgabeschicht insbesondere eine log-likelihood-Fehlerfunktion von Einzel-Streubreiten als Kostenfunktion verwendet werden. Eine solche log-likelihood-Fehlerfunktion wird häufig auch als logarithmische Plausibilitätsfunktion bezeichnet. Mittels einer log-likelihood-Fehlerfunktion kann ein Abstand des jeweiligen weiteren Ausgabesignals von einer Einzel-Streubreite der Aktivierungsstärke des betreffenden Ausgabeneurons abgeschätzt werden. Damit können zu trainierende Parameter, z.B. neuronale Gewichte der mindestens einen Ausgabeschicht dahingehend optimiert werden, dass dieser Abstand minimiert oder zumindest verringert wird.

Ein Ausführungsbeispiel der Erfindung wird nachfolgend anhand der Zeichnung näher erläutert. Dabei veranschaulichen jeweils in schematischer Darstellung:

Figur 1     eine Steuerung einer Maschine mittels eines künstlichen neuronalen Netzes,

Figur 2     ein Trainieren eines künstlichen neuronalen Netzes mittels eines Trainingssystems,

Figur 3     ein Reduktionssystem zum Reduzieren des trainierten neuronalen Netzes,

Figur 4     eine Erweiterung eines trainierten neuronalen Netzes zur Ermittlung von Einzel-Streubreiten von Ausgabeneuronen, und

Figur 5     eine Anordnung zum Reduzieren und Überwachen eines neuronalen Netzes.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

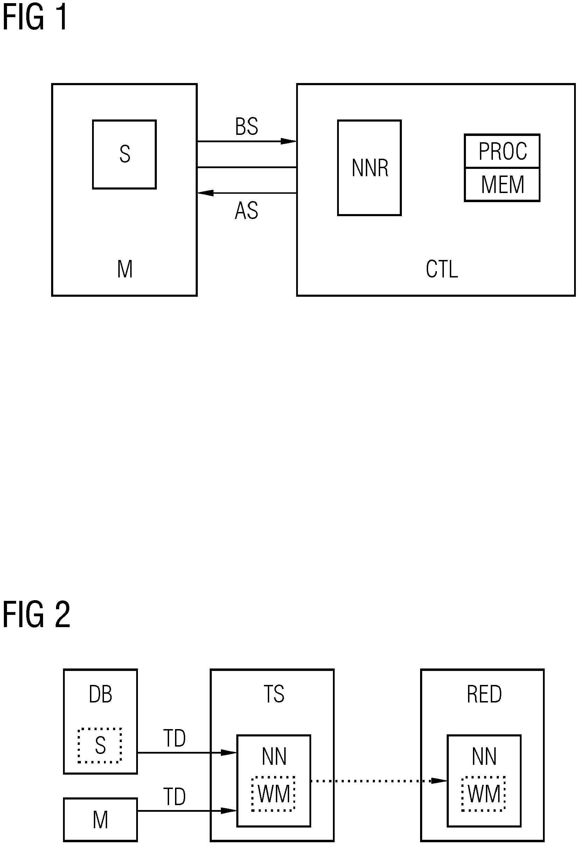

Figur 1 veranschaulicht eine Steuerung einer Maschine M mittels eines trainierten künstlichen neuronalen Netzes NNR in schematischer Darstellung. Die Maschine M kann hierbei insbesondere ein Roboter, ein Motor, eine Werkzeugmaschine, eine Fertigungsanlage, eine Energieversorgungseinrichtung, eine Gasturbine, eine Windturbine, eine Dampfturbine, eine Fräsmaschine, ein Kraftfahrzeug sein oder eine solche Maschine umfassen. Für das vorliegende Ausführungsbeispiel sei angenommen, dass die Maschine M ein Fertigungsroboter ist.

Die Maschine M wird durch eine an diese gekoppelte Maschinensteuerung CTL gesteuert. Letztere ist in Figur 1 extern zur Maschine M dargestellt. Alternativ dazu kann die Maschinensteuerung CTL auch ganz oder teilweise in die Maschine M integriert sein. Die Maschinensteuerung CTL verfügt über einen oder mehrere Prozessoren PROC zum Ausführen von erfindungsgemäßen Verfahrensschritten sowie über einen oder mehrere Speicher MEM zum Speichern von zu verarbeitenden Daten.

Die Maschine M weist eine Sensorik S auf, durch die fortlaufend Betriebsparameter der Maschine M sowie andere Messwerte gemessen werden. Die von der Sensorik S ermittelten Messwerte werden zusammen mit anderen Betriebsdaten der Maschine M in Form von Betriebssignalen BS von der Maschine M zur Maschinensteuerung CTL übermittelt.

Die Betriebssignale BS umfassen insbesondere Sensordaten und/oder Messwerte der Sensorik S, Steuersignale der Maschine M und/oder Zustandssignale der Maschine M. Die Zustandssignale spezifizieren hierbei jeweils einen Betriebszustand der Maschine M oder von einer oder mehreren ihrer Komponenten, vorzugsweise im Zeitverlauf.

Insbesondere können durch die Betriebssignale BS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Betriebssignale BS jeweils durch einen oder mehrere numerische Datenvektoren dargestellt und in dieser Form zur Maschinensteuerung CTL übermittelt.

Das zum Steuern der Maschine M vorgesehene neuronale Netz NNR ist Teil der Maschinensteuerung CTL. Das neuronale Netz NNR ist darauf trainiert, anhand eines eingespeisten Eingabesignals ein Ausgabesignal auszugeben, mittels dessen die Maschine M in optimierter Weise gesteuert werden kann. Zum Training eines solchen neuronalen Netzes NNR steht eine Vielzahl effizienter Verfahren des maschinellen Lernens zur Verfügung, insbesondere Verfahren des bestärkenden Lernens, das häufig auch als Reinforcement-Learning bezeichnet wird.

Insbesondere kann das neuronale Netz NNR ein rekurrentes neuronales Netz, ein faltendes neuronales Netz, ein Perzeptron, ein bayessches neuronales Netz, einen Autoencoder, einen variationalen Autoencoder und/oder eine Deep-Learning-Architektur umfassen.

Im vorliegenden Ausführungsbeispiel werden zum Steuern der Maschine M die Betriebssignale BS als Eingabesignale in eine Eingabeschicht des trainierten neuronalen Netzes NNR eingespeist. Aus den Betriebssignalen BS werden mittels des trainierten neuronalen Netzes NNR Ausgabesignale AS zum Steuern der Maschine M, beispielsweise in Form von numerischen Datenvektoren abgeleitet. Die Ausgabesignale AS oder daraus abgeleitete Signale werden dann als Steuersignale zur Maschine M übermittelt, um diese in optimierter Weise zu steuern.

Figur 2 veranschaulicht ein Trainieren eines zum Steuern der Maschine M vorgesehenen neuronalen Netzes NN. Das neuronale Netz NN kann dabei insbesondere wie in Zusammenhang mit Figur 1 beschrieben implementiert sein und verwendet werden.

Das neuronale Netz NN wird in einem Trainingssystem TS, z.B. durch ein Verfahren des bestärkenden Lernens darauf trainiert, ein Ausgabesignal auszugeben, mittels dessen die Maschine M in optimierter Weise gesteuert werden kann. Das Training wird anhand einer großen Menge von Trainingsdaten TD ausgeführt, die aus einer Datenbank DB, von der Maschine M, von einer dazu ähnlichen Maschine und/oder von einer Simulation der Maschine M stammen.

Unter einem Training sei allgemein eine Optimierung einer Abbildung eines Eingabesignals eines Maschinenlernmoduls, hier eines neuronalen Netzes, auf dessen Ausgabesignal verstanden. Diese Abbildung wird nach vorgegebenen gelernten und/oder zu lernenden Kriterien während einer Trainingsphase optimiert. Als Kriterium können insbesondere bei Steuermodellen ein Erfolg einer Steueraktion oder bei Prädiktionsmodellen ein Prädiktionsfehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien zumindest im statistischen Mittel möglichst gut erfüllt werden. Das Training kann somit als Optimierungsproblem aufgefasst werden.

Für derartige Optimierungsprobleme auf dem Gebiet des maschinellen Lernens ist eine Vielzahl von effizienten Optimierungsverfahren verfügbar, insbesondere Rückpropagationsverfahren, gradientenbasierte Optimierungsverfahren, gradientenfreie Optimierungsverfahren, Partikelschwarmoptimierungen, genetische Optimierungsverfahren und/oder populationsbasierte Optimierungsverfahren.

Zum Training des neuronalen Netzes NN werden diesem in den Trainingsdaten TD enthaltene Betriebssignale der Maschine M als Eingabesignale zugeführt. Im Zuge des Trainings werden dann neuronale Gewichte des neuronalen Netzes NN, vorzugsweise durch eines der vorstehend erwähnten Optimierungsverfahren derart eingestellt, dass die Maschine M mittels der vom neuronalen Netz NN aus den Eingabesignalen abgeleiteten Ausgabesignale in optimierter Weise gesteuert wird. Zur Bewertung einer optimierten Steuerung der Maschine M kann z.B. eine Performanz der Maschine M, insbesondere eine Leistung, ein Wirkungsgrad, ein Durchsatz, eine Ausführungsgeschwindigkeit, eine Fehlerrate oder andere für den Betrieb der Maschine M relevante Parameter gemessen oder simulativ ermittelt und als Optimierungskriterium verwendet werden.

Darüber hinaus wird dem neuronalen Netz NN durch das Trainingssystem TS zum Schutz vor unkontrollierter und unberechtigter Verbreitung ein eindeutiges digitales Wasserzeichen WM aufgeprägt, anhand dessen sich das neuronale Netz NN und/oder seine Herkunft später identifizieren lassen. Der Informationsinhalt des Wasserzeichen WM kann vorgegeben sein und beispielsweise einen Ersteller des neuronalen Netzes NN oder das Trainingssystem TS eindeutig identifizieren.

Im vorliegenden Ausführungsbeispiel wird das digitale Wasserzeichen WM in Ausgabesignale des neuronalen Netzes NN eintrainiert. Um eine Steuerungsqualität des neuronalen Netzes durch das digitale Wasserzeichen nicht zu beeinträchtigen, wird das Training so durchgeführt, dass nach Möglichkeit nur Ausgabesignale verändert werden, die die Steuerung der Maschine nicht oder nur unwesentlich beeinflussen. So kann das digitale Wasserzeichen insbesondere denjenigen Ausgabesignalen von Ausgabeneuronen aufgeprägt werden, die aufgrund einer geringen Aktivierungsstärke ohnehin nicht zum Steuern ausgewählt würden. Insofern das hier beschriebene Reduktionsverfahren eine Verteilung der Aktivierungsstärken verhältnismäßig wenig verändert, ist zu erwarten, dass ein solcherart aufgeprägtes digitales Wasserzeichen auch nach einer Reduktion des trainierten neuronalen Netzes NN relativ sicher nachweisbar bleibt.

Das oben beschriebene Training des neuronalen Netzes NN kann auch unabhängig vom erfindungsgemäßen Verfahren von einem Drittanbieter durchgeführt werden. Die Erfindung erlaubt es mithin, auch fertig trainierte und/oder mit digitalen Wasserzeichen versehene neuronale Netze zu reduzieren und deren Betrieb zu überwachen.

Das trainierte und durch das digitale Wasserzeichen WM markierte neuronale Netz NN wird nach dem Training vom Trainingssystem TS zu einem Reduktionssystem RED übermittelt. Das Reduktionssystem RED dient dem Zweck, das trainierte neuronale Netz NN durch Quantisierung und/oder Pruning zu reduzieren, ohne eine Verteilung von Aktivierungsstärken von Ausgabeneuronen des trainierten neuronalen Netzes NN wesentlich zu beeinträchtigen.

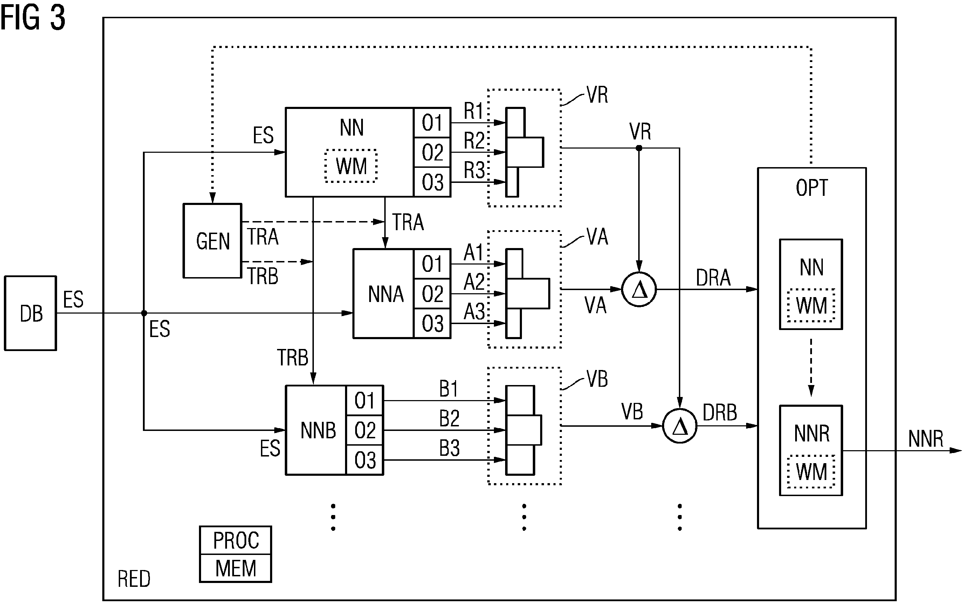

Figur 3 veranschaulicht das Reduktionssystem RED zum Reduzieren des trainierten neuronalen Netzes NN in detaillierterer Darstellung.

Das Reduktionssystem RED verfügt über einen oder mehrere Prozessoren PROC zum Ausführen von erfindungsgemäßen Verfahrensschritten sowie über einen oder mehrere Speicher MEM zum Speichern von zu verarbeitenden Daten.

Im Rahmen des Reduktionsprozesses werden am trainierten neuronalen Netz NN sukzessive diskrete Reduktionsschritte vorgenommen, bei denen jeweils ein Neuron oder eine neuronale Verbindung des neuronalen Netzes NN entfernt oder eine numerische Auflösung von Gewichten des neuronalen Netzes NN verringert wird. Zum Generieren derartiger Reduktionsschritte verfügt das Reduktionssystem RED über einen Generator GEN. Die Reduktionsschritte werden durch den Generator GEN vorzugsweise in Form von Angaben generiert, durch die zu entfernende Neuronen oder zu entfernende neuronale Verbindungen oder ein bitreduzierter Datentyp der neuronalen Gewichte des neuronalen Netzes NN identifiziert oder spezifiziert werden.

Wie oben schon erwähnt, soll der Reduktionsprozess so vorgenommen werden, dass die Verteilung von Aktivierungsstärken von Ausgabeneuronen des trainierten neuronalen Netzes NN nicht wesentlich beeinträchtigt wird. Zu diesem Zweck wird durch den Generator GEN eine Vielzahl von Test-Reduktionsschritten TRA, TRB, ... generiert, deren Auswirkungen auf die Verteilung der Aktivierungsstärken jeweils geprüft wird. Die Generierung der Test-Reduktionsschritte TRA, TRB, ... bzw. eine jeweilige Auswahl von zu entfernenden Neuronen, zu entfernenden neuronalen Verbindungen und/oder bitreduzierten Datentypen kann dabei insbesondere zufallsgestützt erfolgen.

Die generierten Test-Reduktionsschritte TRA, TRB, ... werden am trainierten neuronalen Netz NN testweise vorgenommen, um so jeweils ein reduziertes Test-Netz NNA bzw. NNB, ... zu erzeugen. Im vorliegenden Ausführungsbeispiel wird auf diese Weise das trainierte neuronale Netz NN durch den Test-Reduktionsschritt TRA zum Test-Netz NNA reduziert. Entsprechend wird das trainierte neuronale Netz NN durch den Test-Reduktionsschritt TRB zum Test-Netz NNB reduziert. Weitere Test-Reduktionschritte werden analog dazu ausgeführt.

Die neuronalen Netze NN, NNA, NNB, ... verfügen jeweils über eine Ausgabeschicht, die jeweils verschiedene Ausgabeneuronen O1, O2 und O3 umfasst. Für das vorliegende Ausführungsbeispiel sei angenommen, dass jedes der Ausgabeneuronen O1, O2 und O3 einer an der Maschine M vornehmbaren Steueraktion zugeordnet ist. Zum Steuern der Maschine M würde diejenige Steueraktion ausgeführt, dessen Ausgabeneuron O1, O2 bzw. O3 eine höchste Aktivierungsstärke aufweist.

Unter einer Aktivierungsstärke eines jeweiligen Ausgabeneurons O1, O2 bzw. O3 sei dabei insbesondere ein Ausgabewert oder ein Eingabewert einer Aktivierungsfunktion dieses Neurons verstanden. Ein solcher Eingabewert kann insbesondere eine gewichtete Summe von Ausgabewerten von Neuronen einer dem jeweiligen Ausgabeneuron O1, O2 bzw. O3 vorgeschalteten neuronalen Schicht umfassen. Eine Aktivierungsfunktion wird häufig auch Transfer-Funktion bezeichnet und ist einem auf dem Gebiet des maschinellen Lernens tätigen Fachmann in Bedeutung und Anwendung wohlvertraut.

Aus Gründen der Übersichtlichkeit sind in Figur 3 nur zwei Test-Reduktionsschritte TRA und TRB und zwei daraus resultierende Test-Netze NNA und NNB explizit dargestellt. Weiterhin sind nur jeweils drei Ausgabeneuronen O1, O2 und O3 explizit abgebildet. Entsprechend wird das Reduktionsverfahren im Folgenden anhand der Test-Reduktionsschritte TRA und TRB, der Test-Netze NNA und NNB sowie der jeweiligen Ausgabeneuronen O1, O2 und O3 stellvertretend für alle Test-Reduktionsschritte, Test-Netze bzw. Ausgabeneuronen beschrieben.

Zur Bewertung eines jeweiligen Test-Reduktionsschritts TRA bzw. TRB werden die resultierenden Test-Netze NNA bzw. NNB hinsichtlich der Verteilung von Aktivierungsstärken ihrer Ausgabeneuronen O1, O2 und O3 mit dem unreduzierten neuronalen Netz NN verglichen.

Zu diesem Zweck werden dem unreduzierten trainierten neuronalen Netz NN sowie den Test-Netzen NNA und NNB jeweils eine Vielzahl von Eingabesignalen ES zugeführt. Als Eingabesignale ES können insbesondere Betriebssignale der zu steuernden Maschine M eingespeist werden, die die im Betrieb der Maschine M auftretenden Betriebszustände möglichst repräsentativ abdecken sollten. Derartige Eingabesignale können beispielsweise aus einer Datenbank DB, von der zu steuernden Maschine M, von einer dazu ähnlichen Maschine und/oder von einer Simulation der Maschine M stammen.

Die neuronalen Netze NN, NNA und NNB verarbeiten das jeweilige Eingabesignal ES und steuern gemäß ihrer jeweiligen neuronalen Struktur die jeweiligen Ausgabeneuronen O1, O2 und O3 an.

Beim trainierten neuronalen Netz NN werden, induziert durch das jeweilige Eingabesignal ES, das Ausgabeneuron O1 mit einer Aktivierungsstärke R1, das Ausgabeneuron O2 mit einer Aktivierungsstärke R2 und das Ausgabeneuron O3 mit einer Aktivierungsstärke R3 aktiviert. Das Reduktionssystem RED erfasst die Aktivierungsstärken R1, R2 und R3 und ermittelt eine Verteilung VR dieser Aktivierungsstärken R1, R2 und R3 über die Ausgabeneuronen O1, O2 und O3 des trainierten neuronalen Netzes NN. Die ermittelte Verteilung VR dient im Folgenden als Referenzverteilung.

Entsprechend werden bei den Test-Netzen NNA und NNB, jeweils induziert durch das jeweilige Eingabesignal ES, das jeweilige Ausgabeneuron O1 mit einer jeweiligen Aktivierungsstärke A1 bzw. B1, das jeweilige Ausgabeneuron O2 mit einer jeweiligen Aktivierungsstärke A2 bzw. B2 und das jeweilige Ausgabeneuron O3 mit einer jeweiligen Aktivierungsstärke A3 bzw. B3 aktiviert. Das Reduktionssystem RED erfasst die jeweiligen Aktivierungsstärken A1, A2 und A3 bzw. B1, B2 und B3 und ermittelt deren jeweilige Verteilung VA bzw. VB.

Wie in Figur 3 angedeutet, sei für das vorliegende Ausführungsbeispiel angenommen, dass ein betrachtetes Eingabesignal ES in allen neuronalen Netzen NN, NNA und NNB das jeweilige Ausgabeneuron O2 mit der höchsten Aktivierungsstärke aller Ausgabeneuronen O1, O2 und O3 anregt. Dementsprechend würde bei allen neuronalen Netzen NN, NNA und NNB die dem Ausgabenneuron O2 zugeordnete Steueraktion beim Steuern der Maschine M ausgeführt.

Im Gegensatz dazu unterscheiden sich allerdings die Verteilungen VR, VA und VB der jeweiligen Aktivierungsstärken. Wie oben schon erwähnt, können auch nichtmaximale Aktivierungsstärken und insbesondere spezifische Verteilungen von Aktivierungsstärken wertvolle Information über den Betrieb und die Steuerung der Maschine M enthalten. So erweist sich beispielsweise die Aktivierungsstärke B2 des Test-Netzes NNB weniger dominierend als bei den anderen neuronalen Netzen NN und NNA. Beim Test-Netz NNB besteht also eine größere Unsicherheit über die anzuwendende Steueraktion als bei den anderen neuronalen Netzen NN und NNA. Zumindest in dieser Hinsicht weicht das Test-Netz NNA weniger vom als Referenz dienenden neuronalen Netz NN ab als das Test-Netz NNB. Mittels des Test-Netzes NNA kann also eine Unsicherheit über die anzuwendende Steueraktion zumindest in diesem Fall besser bewertet werden als mittels des Test-Netzes NNB.

Zur Steuerung des Reduktionsprozesses in Richtung von neuronalen Netzen, deren Verteilungen von Aktivierungsstärken möglichst ähnlich zur Referenzverteilung VR sind, werden die Verteilungen VA und VB mit der Referenzverteilung VR verglichen. Dabei werden eine Abweichung DRA zwischen der Verteilung VA und der Referenzverteilung VR sowie eine Abweichung DRB zwischen der Verteilung VB und der Referenzverteilung VR durch das Reduktionssystem RED ermittelt. Als jeweilige Abweichung DRA bzw. DRB wird vorzugsweise eine Kullback-Leibler-Divergenz der betreffenden Verteilungen VR und VA bzw. VR und VB ermittelt. Für die Abweichung DRA z.B. gemäß

$$DRA_{KL}(VA \mid\mid VR) = \sum_{x \in X}^{N} VA(x) \log\left(\frac{VA(x)}{VR(x)}\right)$$

, wobei X eine Menge aller Ausgabeneuronen, hier O1, O2 und O3, N eine Anzahl der Ausgabeneuronen, hier 3, und x ein jeweiliges Ausgabeneuron darstellen. Die Abweichung DRB kann entsprechend berechnet werden.

Die für die Vielzahl von Eingabesignalen ES ermittelten Abweichungen DRA und DRB werden in ein Optimierungsmodul OPT des Reduktionssystems RED eingespeist. Das Optimierungsmodul OPT vergleicht diese Abweichungen DRA und DRB und ermittelt dasjenige oder diejenigen Test-Netze, hier NNA oder NNB bzw. denjenigen oder diejenigen Test-Reduktionsschritte, hier TRA oder TRB, die zumindest im Mittel die geringste Abweichung, hier DRA oder DRB aufweisen.

Für das vorliegende Ausführungsbeispiel sei angenommen, dass das Test-Netz NNA im Mittel die geringste Abweichung DRA aller Test-Netze aufweist. Infolgedessen wird der zugehörige Test-Reduktionsschritt TRA als verteilungsoptimierender Reduktionsschritt durch das Optimierungsmodul OPT selektiert.

Das beschriebene Verfahren kann iterativ fortgesetzt werden, wobei durch das Optimierungsmodul OPT weitere verteilungsoptimierende Reduktionsschritte selektiert werden. Die Iteration kann vorzugsweise abgebrochen werden, sobald eine minimale Abweichung zwischen Verteilungen der Aktivierungsstärken von Test-Netzen und der Referenzverteilung VR einen vorgegebenen Abweichungs-Schwellwert überschreitet. Auf diese Weise kann die Iteration beendet werden, falls nur noch Reduktionsschritte generiert bzw. gefunden werden, die die Verteilung von Aktivierungsstärken wesentlich beeinträchtigen.

Durch die selektierten Reduktionsschritte, hier DRA, wird das neuronale Netz NN durch das Selektionsmodul schließlich zu einem reduzierten neuronalen Netz NNR reduziert, dessen Verteilung von Aktivierungsstärken verhältnismäßig ähnlich zur Referenzverteilung VR ist. Auf diese Weise bleiben viele überwachungsrelevante Informationen und Verhaltensweisen des neuronalen Netzes NN bei seiner Reduktion erhalten.

Insbesondere ist zu erwarten, dass das in Ausgabesignale des neuronalen Netzes NN eintrainierte digitale Wasserzeichen WM durch den obigen Reduktionsprozess nicht wesentlich beeinträchtigt wird.

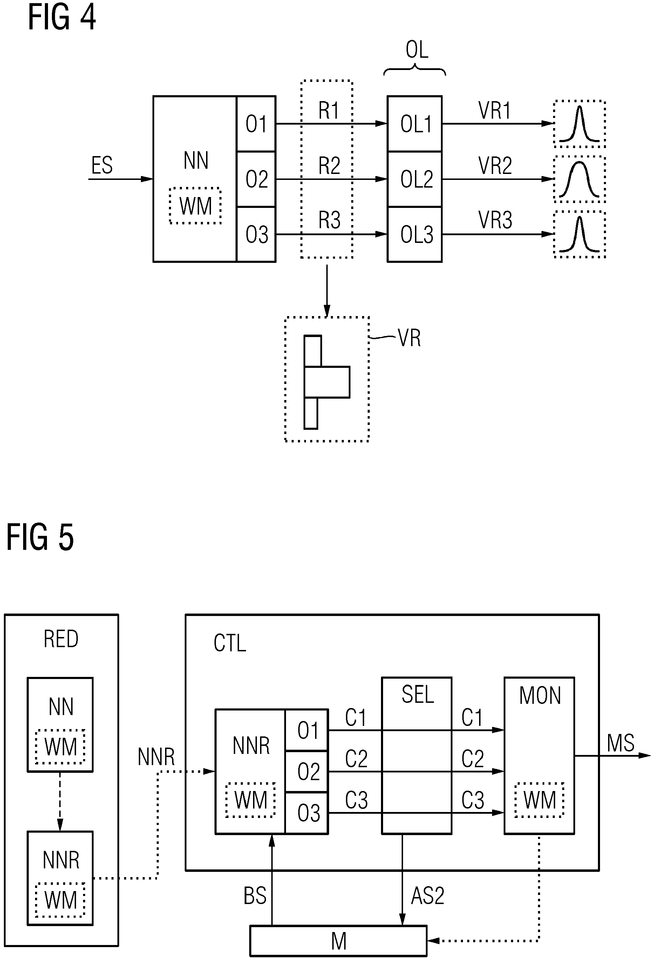

Figur 4 veranschaulicht eine optionale Erweiterung des trainierten neuronalen Netzes NN zur Ermittlung einer jeweiligen Einzel-Streubreite VR1, VR2 bzw. VR3 einer jeweiligen Aktivierungsstärke R1, R2 bzw. R3 eines jeden einzelnen Ausgabeneurons O1, O2 bzw. O3.

Die Einzel-Streubreiten VR1, VR2 und VR3 können zusätzlich zur Referenzverteilung VR verwendet werden, um den Reduktionsprozess in Richtung von neuronalen Netzen zu treiben, die sich hinsichtlich der Aktivierungsstärken ihrer Ausgabeneuronen ähnlich wie das unreduzierte neuronale Netz NN verhalten. Dies führt in vielen Fällen zu einem robusteren Reduktionsprozess.

Zur effizienten Ermittlung der Einzel-Streubreiten VR1, VR2 bzw. VR3 wird das trainierte neuronale Netz NN um eine oder mehrere zusätzliche, den Ausgabeneuronen O1, O2 und O3 nachgeschaltete Ausgabeschichten OL erweitert. Die mindestens eine nachgeschaltete Ausgabeschicht OL umfasst zusätzliche Ausgabeneuronen OL1, OL2 und OL3. Dabei ist das zusätzliche Ausgabeneuron OL1 dem Ausgabeneuron O1, das zusätzliche Ausgabeneuron OL2 dem Ausgabeneuron O2 und das zusätzliche Ausgabeneuron OL3 dem Ausgabeneuron O3 zugeordnet.

Die mindestens eine nachgeschaltete Ausgabeschicht OL wird darauf trainiert, für ein jeweiliges Ausgabeneuron O1, O2 bzw. O3 eine jeweilige Einzel-Streubreite VR1, VR2 bzw. VR3 von dessen jeweiligen Aktivierungsstärken R1, R2 bzw. R3 durch ein jeweiliges Ausgabesignal des jeweils zugeordneten zusätzlichen Ausgabeneurons OL1, OL2 bzw. OL3 zu reproduzieren. Dieses Training kann - wie oben allgemein beschrieben - durch Optimierung von neuronalen Gewichten der mindestens einen nachgeschalteten Ausgabeschicht OL durchgeführt werden. Während des Trainings der mindestens einen nachgeschalteten Ausgabeschicht OL bleiben neuronale Gewichte oder andere Lernparameter des ursprünglichen trainierten neuronalen Netzes NN unverändert.

Zum Zwecke des Trainings werden dem erweiterten neuronalen Netz NN eine Vielzahl von Eingabesignalen ES zugeführt. Das erweiterte neuronale Netz NN verarbeitet das jeweilige Eingabesignal ES und steuert entsprechend die Ausgabeneuronen O1, O2 und O3 an. Die resultierenden Aktivierungsstärken R1, R2 und R3 der Ausgabeneuronen O1, O2 und O3 werden dann in die mindestens eine nachgeschaltete Ausgabeschicht OL eingespeist. Daneben wird, wie im Zusammenhang mit Figur 3 beschrieben, die Referenzverteilung VR der Aktivierungsstärken R1, R2 und R3 über die Ausgabeneuronen O1, O2 und O3 ermittelt.

Die mindestens eine nachgeschaltete Ausgabeschicht OL setzt eine jeweils eingespeiste Aktivierungsstärke R1, R2 bzw. R3 in ein Ausgabesignal des jeweiligen zusätzlichen Ausgabeneurons OL1, OL2 bzw. OL3 um. Die mindestens eine nachgeschaltete Ausgabeschicht OL wird nun derart trainiert, dass das jeweilige Ausgabesignal des jeweiligen zusätzlichen Ausgabeneurons OL1, OL2 bzw. OL3 im Mittel möglichst wenig von einer jeweiligen Einzel-Streubreite VR1, VR2 bzw. VR3 der jeweiligen Aktivierungsstärke R1, R2 bzw. R3 abweicht.

Als Kostenfunktion für ein derartiges Training kann insbesondere eine log-likelihood-Fehlerfunktion NLL verwendet werden. Beispielsweise gemäß

$$ NLL \ = \sum_i \ \ log(\sigma^2(ES_i, R_i)) \frac{1}{2} + \left(R_i - \mu(R_i)\right)^2 / (2\sigma^2(ES_i, R_i)), $$

wobei $ES_i$ die Eingabesignale, $R_i$ die Aktivierungsstärken, $\mu(R_i)$ einen prognostizierten Erwartungswert der Aktivierungsstärken und $\sigma^2(ES_i, R_i)$ eine prognostizierte statistische Streubreite der Aktivierungsstärken in Form einer Varianz symbolisieren.

Durch die log-likelihood-Fehlerfunktion wird ein Abstand von Ausgabesignalen der zusätzlichen Ausgabeneuronen OL1, OL2 und OL3 von den Einzel-Streubreiten VR1, VR2 und VR3 der Aktivierungsstärken der Ausgabeneuronen O1, O2 und O3 abgeschätzt. Damit können zu trainierende Parameter, z.B. neuronale Gewichte der mindestens einen Ausgabeschicht OL dahingehend optimiert werden, dass dieser Abstand minimiert wird.

Die Einzel-Streubreiten VR1, VR2 und VR3 können somit durch die Ausgabesignale der trainierten mindestens einen zusätzlichen Ausgabeschicht OL prognostiziert werden.

Nach dem Training der mindestens einen zusätzlichen Ausgabeschicht OL kann das um diese Schicht erweiterte neuronale Netz NN dem in Figur 3 beschriebenen Reduktionsprozess unterzogen werden. Dabei werden neben den Verteilungen VA und VB auch noch die Verteilungen der prognostizierten Einzel-Streubreiten VR1, VR2 und VR3 mit entsprechenden Verteilungen des unreduzierten neuronalen Netzes NN verglichen. Insbesondere wird jeweils eine weitere Abweichung zwischen einer jeweiligen Verteilung der prognostizierten Einzel-Streubreiten VR1, VR2 und VR3 des erweiterten neuronalen Netzes NN und einer entsprechenden Verteilung eines betreffenden Test-Netzes ermittelt. Die weiteren Abweichungen werden vorzugsweise als Kullback-Leibler-Divergenz ermittelt. Entsprechend wird der Reduktionsprozess so ausgeführt, dass auch die weiteren Abweichungen durch die Reduktion nicht wesentlich beeinträchtigt werden.

Vorzugsweise wird eine gewichtete Summe einer jeweiligen Abweichung von der Referenzverteilung VR und einer jeweiligen weiteren Abweichung gebildet. Durch das Optimierungsmodul OPT kann dann derjenige Test-Reduktionsschritt als verteilungsoptimierender Reduktionsschritt selektiert werden, dessen gewichtete Summe minimal ist.

Im Übrigen kann der Reduktionsprozess wie im Zusammenhang mit Figur 3 beschrieben ausgeführt werden, um schließlich ein reduziertes neuronales Netz NNR zu erhalten.

Figur 5 veranschaulicht eine Anordnung zum Reduzieren und Überwachen eines neuronalen Netzes.

Wie oben beschrieben, wird das trainierte und mit einem Wasserzeichen WM versehene neuronale Netz NN durch das Reduktionssystem RED zu einem reduzierten neuronalen Netz NNR reduziert. Letzteres wird vom Reduktionssystem RED zu einer Steuereinrichtung CTL übertragen, um dort zum Steuern der Maschine M eingesetzt zu werden.

Zu diesem Zweck werden dem reduzierten neuronalen Netz Betriebssignale BS der Maschine M als Eingabesignale zugeführt.

Das reduzierte neuronale Netz NNR verarbeitet die Eingabesignale BS und steuert entsprechend die Ausgabeneuronen O1, O2 und O3 an. Infolge dieser Ansteuerung werden das Ausgabeneuron O1 mit der Aktivierungsstärke C1, das Ausgabeneuron O2 mit der Aktivierungsstärke C2 und das Ausgabeneuron O3 mit der Aktivierungsstärke C3 aktiviert.

Die durch ein jeweiliges Eingabesignal BS induzierten Aktivierungsstärken C1, C2 und C3 werden im laufenden Betrieb der Maschine M in ein Selektionsmodul SEL der Steuereinrichtung CTL eingespeist. Das Selektionsmodul SEL dient dem Zweck, aus den Aktivierungsstärken C1, C2 und C3 ein Ausgabesignal AS zum Steuern der Maschine M zu selektieren oder abzuleiten.

Wie oben schon erwähnt, wird zum Steuern der Maschine M in der Regel diejenige Steueraktion ausgewählt, die für ein gegebenes Eingabesignal ES die höchste Aktivierungsstärke C1, C2 bzw. C3 aufweist. Falls beispielsweise die Aktivierungsstärke C2 des Ausgabeneurons O2 größer ist als die anderen Aktivierungsstärken C1 und C3, wird durch das Selektionsmodul SEL die dem Ausgabeneuron O2 zugeordnete Steueraktion selektiert. Entsprechend wird ein diese Steueraktion auslösendes Ausgabesignal AS2 zum Steuern der Maschine M ausgegeben.

Darüber hinaus werden die Aktivierungsstärken C1, C2 und C3 im laufenden Betrieb der Maschine M auch einer Überwachungseinrichtung MON der Steuereinrichtung CTL zugeführt. Die Überwachungseinrichtung dient dem Zweck, den Betrieb der Maschine M und des neuronalen Netzes NNR zu überwachen.

Hierzu prüft die Überwachungseinrichtung MON Ausgabesignale des reduzierten neuronalen Netzes NNR sowie die Aktivierungsstärken C1, C2 und C3. Insbesondere werden hierbei auch die nicht maximalen Aktivierungsstärken ausgewertet. Diese weichen aufgrund des spezifischen Reduktionsprozesses verhältnismäßig wenig von denjenigen des ursprünglichen trainierten neuronalen Netzes NN ab.

Die Überwachungseinrichtung MON prüft zunächst, ob die Ausgabesignale des reduzierten neuronalen Netzes NNR und/oder die Aktivierungsstärken C1, C2 und C3 das eintrainierte digitale Wasserzeichen WM enthalten. Aufgrund der zusätzlichen Berücksichtigung nichtmaximaler Aktivierungsstärken können so auch digitale Wasserzeichen verhältnismäßig zuverlässig erkannt werden, die nur schwach aktivierten Ausgabeneuronen aufgeprägt wurden. Zur Erkennung von Wasserzeichenmustern steht eine Vielzahl von bekannten Mustererkennungsverfahren zur Verfügung.

Falls das digitale Wasserzeichen WM durch die Überwachungseinrichtung MON erkannt wird, kann diese ein Benutzungssignal als Überwachungssignal MS ausgeben. Das Benutzungssignal kann beispielsweise zu einem Ersteller des trainierten neuronalen Netzes NN, zu einem Betreiber des Trainingssystems TS und/oder zu einem Betreiber des Reduktionssystems RED übermittelt werden, um den jeweiligen Adressaten über eine Nutzung des reduzierten neuronalen Netzes NNR zu informieren.

Darüber hinaus kann das Überwachungsmodul MON viele weitere Überwachungsmaßnahmen am reduzierten neuronalen Netz NNR ausführen, die die Aktivierungsstärken C1, C2 und C3 in differenzierter Weise auswerten, und die darauf angewiesen sind, dass die Verteilung der Aktivierungsstärken durch die Reduktion nicht wesentlich beeinträchtigt wird.

So kann beispielsweise eine Streubreite der Aktivierungsstärken C1, C2 und C3 über die Ausgabeneuronen O1, O2 und O3 ermittelt werden. Abhängig von der ermittelten Streubreite kann dann

- ein eine Unsicherheit eines Ausgabesignals, hier AS2, des reduzierten neuronalen Netzes NNR quantifizierendes Unsicherheitssignal,
- ein Warnsignal oder Alarmsignal zur Warnung vor einer möglichen Fehlfunktion der Maschine M,
- ein Steuersignal zum Steuern der Maschine M in einen Sicherheitsmodus,
- ein Anforderungssignal zum Anfordern eines Nachtrainings oder Neutrainings des reduzierten neuronalen Netzes NNR,
- ein Wartungssignal zur Anzeige einer Degradation der Maschine M und/oder
- ein alternatives Steuersignal oder Klassifikationssignal als Überwachungssignal MS ausgegeben werden.

**Patentansprüche**

1. Computerimplementiertes Verfahren zum Reduzieren und Überwachen eines zum Steuern einer Maschine trainierten neuronalen Netzes (NN), wobei

   a) zum Reduzieren des trainierten neuronalen Netzes (NN) diskrete Reduktionsschritte vorgesehen sind, durch die jeweils mindestens ein Neuron entfernt wird, mindestens eine neuronale Verbindung entfernt wird und/oder eine numerische Auflösung verringert wird,
   b) das trainierte neuronale Netz (NN) durch unterschiedliche Test-Reduktionsschritte (TRA, TRB) jeweils zu einem Test-Netz (NNA, NNB) reduziert wird,
   c) eine Vielzahl von Eingabesignalen (ES) in das trainierte neuronale Netz (NN) sowie in die Test-Netze (NNA, NNB) eingespeist wird,
   d) für ein jeweiliges Eingabesignal (ES)

   - eine Referenzverteilung (VR) von durch das jeweilige Eingabesignal (ES) induzierten, ersten Aktivierungsstärken von Ausgabeneuronen (O1, O2, O3) des trainierten neuronalen Netzes (NN) ermittelt wird, und
   - für die Test-Reduktionsschritte (TRA, TRB) jeweils eine Abweichung (DRA, DRB) der Referenzverteilung (VR) von einer entsprechenden Verteilung (VA, VB) von zweiten Aktivierungsstärken von Ausgabeneuronen des betreffenden Test-Netzes (NNA, NNB) ermittelt wird,

   e) das trainierte neuronale Netz (NN) durch Test-Reduktionsschritte, deren Abweichungen im Mittel geringer sind, als die Abweichungen anderer Test-Reduktionsschritte zu einem reduzierten neuronalen Netz (NNR) reduziert wird,
   f) das reduzierte neuronale Netz (NNR) betrieben wird, wobei im laufenden Betrieb dritte Aktivierungsstärken von Ausgabeneuronen des reduzierten neuronalen Netzes (NNR) erfasst werden, und
   g) abhängig von den dritten Aktivierungsstärken ein Überwachungssignal (MS) zum Überwachen des Betriebs ausgegeben wird.

2. Verfahren nach Anspruch 1, **dadurch gekennzeichnet,**

   **dass** eine Streubreite der dritten Aktivierungsstärken ermittelt wird, und
   **dass** abhängig von der ermittelten Streubreite

   - ein eine Unsicherheit eines Ausgabesignals des reduzierten neuronalen Netzes (NNR) quantifizierendes Unsicherheitssignal,
   - ein Warnsignal oder Alarmsignal zur Warnung vor einer möglichen Fehlfunktion der Maschine (M),
   - ein Steuersignal zum Steuern der Maschine (M) in einen Sicherheitsmodus,
   - ein Anforderungssignal zum Anfordern eines Nachtrainings oder Neutrainings des reduzierten neuronalen Netzes (NNR),
   - ein Wartungssignal zur Anzeige einer Degradation der Maschine (M) und/oder
   - ein alternatives Steuersignal oder Klassifikationssignal als Überwachungssignal (MS) ausgegeben wird.

3. Verfahren nach einem der vorhergehenden Ansprüche, **dadurch gekennzeichnet,**

   **dass** Ausgabesignalen des trainierten neuronalen Netzes ein digitales Wasserzeichen (WM) aufgeprägt ist,
   **dass** geprüft wird, ob Ausgabesignale des reduzierten neuronalen Netzes (NNR) das digitale Wasserzeichen (WM) enthalten, und
   **dass** abhängig vom Prüfungsergebnis ein Benutzungssignal als Überwachungssignal (MS) ausgegeben wird.

4. Verfahren nach einem der vorhergehenden Ansprüche, **dadurch gekennzeichnet,**
   **dass** als Abweichung (DRA, DRB) zwischen der Referenzverteilung (VR) und der jeweiligen Verteilung (VA, VB) von zweiten Aktivierungsstärken eine Kullback-Leibler-Divergenz dieser Verteilungen ermittelt wird.

5. Verfahren nach einem der vorhergehenden Ansprüche, **dadurch gekennzeichnet, dass**

   a) das trainierte neuronale Netz (NN) um mindestens eine nachgeschaltete Ausgabeschicht (OL) erweitert wird,
   b) die mindestens eine Ausgabeschicht (OL) darauf trainiert wird, für ein jeweiliges Ausgabeneuron (O1, O2, O3) des trainierten neuronalen Netzes (NN) eine jeweilige Einzel-Streubreite (VR1, VR2, VR3) von dessen jeweiliger erster Aktivierungsstärke durch ein dem jeweiligen Ausgabeneuron (O1, O2, O3) zugeordnetes, weiteres Ausgabesignal zu reproduzieren, und
c) die Reduktion an dem durch die trainierte mindestens eine Ausgabeschicht (OL) erweiterten trainierten neuronalen Netz ausgeführt wird, wobei

- eine weitere Abweichung zwischen einer Verteilung der weiteren Ausgabesignale des erweiterten trainierten neuronalen Netzes und einer entsprechenden Verteilung der weiteren Ausgabesignale des betreffenden Test-Netzes (NNA, NNB) ermittelt wird, und
- das erweiterte trainierte neuronale Netz durch Test-Reduktionsschritte, deren weitere Abweichungen im Mittel geringer sind, als die weiteren Abweichungen anderer Test-Reduktionsschritte zum reduzierten neuronalen Netz (NNR) reduziert wird.

6. Verfahren nach Anspruch 5, **dadurch gekennzeichnet,**
**dass** zum Training der mindestens einen Ausgabeschicht (OL) eine log-likelihood-Fehlerfunktion von Einzel-Streubreiten als Kostenfunktion verwendet wird.

7. Anordnung zum Reduzieren und Überwachen eines zum Steuern einer Maschine (M) trainierten neuronalen Netzes (NN), eingerichtet zum Ausführen aller Verfahrensschritte eines Verfahrens nach einem der vorhergehenden Ansprüche.

8. Computerprogrammprodukt umfassend Befehle, die bei der Ausführung durch einen Computer diesen veranlassen, ein Verfahren nach einem der Ansprüche 1 bis 6 auszuführen.

9. Computerlesbares Speichermedium mit einem Computerprogrammprodukt nach Anspruch 8.

# FIG 1

# FIG 2

FIG 3

# FIG 4

# FIG 5

Europäisches
Patentamt

European
Patent Office

Office européen
des brevets

# EUROPÄISCHER RECHERCHENBERICHT

**Nummer der Anmeldung**

**EP 22 18 7291**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TAILIN LIANG ET AL: "Pruning and Quantization for Deep Neural Network Acceleration: A Survey", ARXIV.ORG, CORNELL UNIVERSITY LIBRARY, 201 OLIN LIBRARY CORNELL UNIVERSITY ITHACA, NY 14853, 24. Januar 2021 (2021-01-24), XP081866346, * Seiten 1,14 * | 1-9 | INV. G06N3/082 G06N3/084 G06N3/092 G06N3/045 |
| A | Migacz Szymon: "8-bit Inference with TensorRT", , 8. Mai 2017 (2017-05-08), Seiten 1-41, XP055967266, Gefunden im Internet: URL:https://on-demand.gputechconf.com/gtc/2017/presentation/s7310-8-bit-inference-with-tensorrt.pdf [gefunden am 2022-10-03] * Seite 18 * | 1-9 | |

-----

-----

**RECHERCHIERTE SACHGEBIETE (IPC)**

G06N

Der vorliegende Recherchenbericht wurde für alle Patentansprüche erstellt

| Recherchenort | Abschlußdatum der Recherche | Prüfer |
|---|---|---|
| Den Haag | 18. Januar 2023 | Falco, Gabriele |

EPO FORM 1503 03.82 (P04C03)